# EUROPEAN PATENT SPECIFICATION

(11) **EP 0 559 302 B1**
(45) Date of publication and mention of the grant of the patent: **11.09.1996**
(21) Application number: 93201503.5
(22) Date of filing: 18.02.1991
(51) Int. Cl.: B65G 47/84

(54) **Conveyor**
Förderer
Convoyeur

(30) Priority: 19.02.1990 NL 9000393
(43) Date of publication of application: 08.09.1993
(62) Divisional of application: 91200334.0
(73) Proprietor: VANDERLANDE INDUSTRIES NEDERLAND B.V., NL-5466 RB Veghel (NL)
(72) Inventor: Van den Goor, Jakobus Marie, NL-5674 SH Nuenen (NL)
(74) Representative: Vollebregt, Cornelis Jacobus, Ir.

(56) References cited:
- FR-A- 852 176
- GB-A- 2 057 381
- US-A- 3 361 247

## Description

The invention relates to a conveyor having a frame and an endless drivable conveying means provided with carriers extending parallel to each other, transversely to the direction of displacement of the conveying means, said carriers being pivotally coupled to at least one endless flexible coupling means, whilst at least some of the carriers support pusher shoes, said pusher shoes being connected to guide means located at the sides of the carriers remote from the pusher shoes, which guide means can co-operate with two guide rails provided at certain locations and extending in opposite directions, obliquely with respect to the intended direction of movement of the carriers, said guide rails intersecting one another, at the location of the point of intersection an adjustable switching device being provided, comprising at least one switch blade, which is adjustable between a first position, in which a guide means can move along the one of the two guide rails, and a second position, in which the guide means can move along the other of the two guide rails.

Such a conveyor is known from US-A-3,361,247 (figure 18). In said known structure there has been provided a single actuating element for adjusting the switch blade said actuating element having to co-operate with guide means moving along the one guide rail as well as with guide means moving along the other guide rail. In view thereof it is necessary to mount said actuating element close to the point of intersection and close to the switch blade. Especially when the carriers are moving with a high speed there is a risk that jamming of guide means and switch blade occurs.

Now according the invention an operating means is disposed near each guide rail and both operating means are mechanically coupled to the switch blade and disposed upstream of the point of intersection of the two guide rails, when seen in the intended direction of movement of the guide means along the guide rails, said operating means each being adjustable, by guide means guided by the associated guide rail moving along during operation, from a position in the path of the guide means in question to a position outside said path, while simultaneously moving the switch blade from a position in the path of the guide means in question to a position in which the guide means is allowed to continue its movement along the guide rail in question, whilst the other operating means is simultaneously pivoted into a position in which it will come to lie in the path of movement of a guide means moving along the other guide rail.

In using an operating means for the switch blade near each guide rail it is possible to mount the operating means at some distance upstreams of the point of intersection so that a timely adjustment of the switch blade in a correct position prior to the arrival of a guide means in the point of intersection can be obtained.

The invention will be further explained hereafter with reference to a few possible embodiments of the construction according to the invention diagrammatically illustrated in the accompanying figures.

Figure 1 is a perspective view of part of a conveying means of a conveyor according to the invention.

Figure 2 is a larger-scale sectional view of a carrier with a pusher shoe supported by the carrier.

Figures 3-5 are various possible embodiments of a switching construction according to the invention.

The general principle of the conveyor according to the invention may e.g. be such as described in the US Patents 4,717,011 and 4,732,259. Therefore the general construction of the conveyor according to the invention is not described and shown herein, as it is considered to be obvious to those skilled in the art.

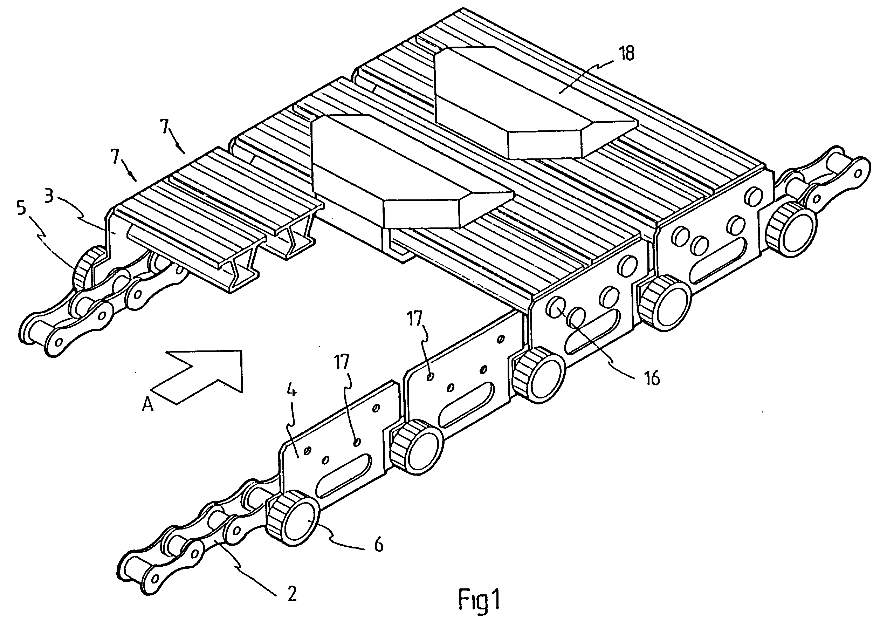

As is illustrated more in particular in Figure 1 the conveyor comprises an endless conveying means, which is only partially illustrated in Figure 1, said conveying means being provided with two endless coupling means formed by chains 1 and 2. The endless chains extending parallel to each other are passed over sprocket wheels and/or tensioning wheels (not shown), whereby at least a few of said sprocket wheels can be driven, so as to be able to move the upper parts of said chains illustrated in Figure 1 in the direction according to the arrow A.

Supporting plates 3 and 4, extending perpendicularly to the pivot pins of the chains, are secured to the chains in the manner illustrated in Figure 1. The supporting plates 3 and 4 respectively are thereby each pivotally coupled to the chain 1 or 2 in question in a single point, in such a manner that the pivot pin about which the supporting plate 3 or 4 can pivot with respect to the chain 1 or 2, coincides with the central axis of a pivot pin forming part of the chain in question. Near the pivot pin in question the chain is also provided with guide rollers 5 and 6 respectiviely, which support at least the upper parts of the chains 1 and 2 when they move in the direction according to the arrow A on supporting rails (not shown) or the like forming part of the device.

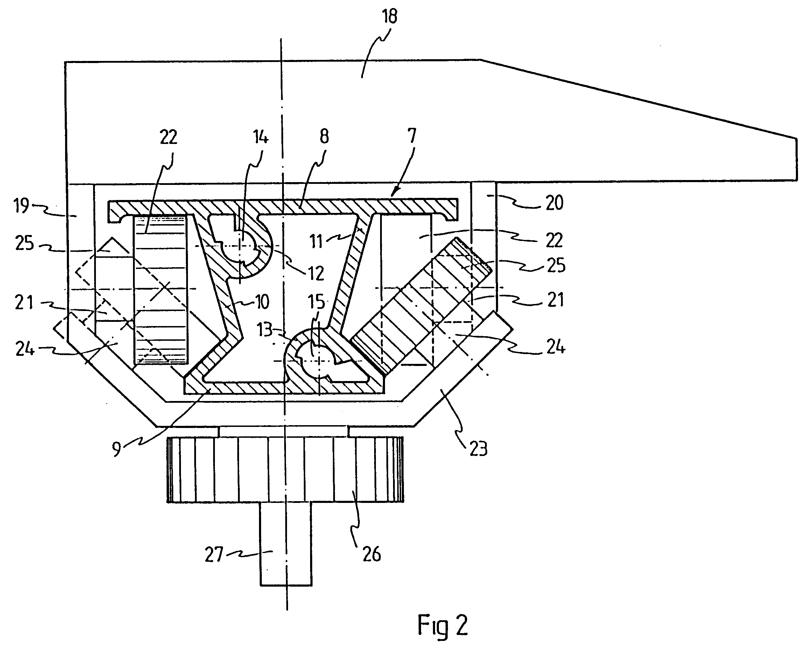

Two carriers 7 extending parallel to each other are provided between each pair of supporting plates 3 and 4. In the embodiment illustrated in Figures 1 and 2 the carriers 7 e.g. consist of sections extruded from aluminium or plastic material. Each section shown in Figures 1 and 2 thereby has a flat, plate-shaped, more particalarly rectangular, upper side 8 and a bottom side 9 extending parallel to said upper side. The upper side 8 is connected to the bottom side by two wall parts 10 and 11 having a V-shaped section. Recesses 14 and 15 respectively are formed, by means of further wall parts 12 and 13 respectively, in the inner sides of said wall parts, said recesses funcioning to receive connecting pins 16, which can be inserted into the holes 17 provided in the supporting plates 3 and 4 and into the recesses 14 and 15 in order to secure the ends of the carriers 7 in question to the supporting plates 3 and 4.

Each pair of supporting plates 3 and 4 therefore supports two carriers 7 extending parallel to each other, whilst a pusher shoe 18 located above each group of two carriers thus formed co-operates with said carriers. Embodiments wherein more that two, or only one, carriers are secured to a pair of supporting plates are also possible, however.

Arms 19 and 20 reaching downwards are mounted on the bottom side of the pusher shoes 18. The arm 20 thereby extends through the slot located between the upper sides 8 of the carriers 7 of a group supported by opposed supporting plates 3 and 4, whilst the arm 19 extends through the slot located between the rear boundary edge of the upper side of the rearmost carrier 7 associated with a group and the foremost boundary edge of a group of carriers supported by a pair of supporting plates when seen in the direction of movement of the carriers 7.

Pins 21 are secured to the sides of the arms 19 and 20 directed towards each other, rollers 22 being freely rotatable about said pins. As will be apparent from Figure 2 the axes of rotation of the rollers 22 lie in a plane extending perpendicularly to the longitudinal direction of the carrier 7 in question. The rollers 22 thereby bear against the bottom side of the plate-shaped upper side 8 of the carrier in question.

A coupling strip 23 extending under the carrier 7 in question is provided between the arms 19 and 20. Pins 24 are secured to the end of the coupling strip 23 located near the arms 19 and 20 respectively, rollers 25 being rotatable about said pins. As will be apparent from Figure 2 the axes of rotation of the rollers 25, which also lie in a plane extending perpendicularly to the longitudinal axis of the carrier 7 in question, cross the axes of rotation of the nearby rollers 22 at an angle of ± 45°. The rollers 25 are thereby supported on the lower parts of the V-shaped partitions 10 and 11 respectively.

It will be apparent that in this way the pusher shoe 18 is supported on the carrier 7, under the upper surface of said carrier, by means of the rollers 22 and 25, in such a manner that the pusher shoe 18 can be moved, with minimal effort, in the longitudinal direction of the carrier 7, whilst a movement transversely to the longitudinal axis of the carrier 7 will practically be ruled out.

To the bottom side of the connecting strip 23 there is furthermore secured a further guide means consisting of a roller 26 and a pin 27 projecting below said roller, said roller 26 being freely rotatable about said pin.

Assuming that the carriers 7 forming the upper part of the conveying means lie in a horizontal plane, the pin 27 extends vertically downwards from an associated carrier 7.

As will furthermore be apparent from Figure 1 the pusher shoe 18 supported by a single carrier 7 not only extends over the carrier in question, but also over part of the adjacent carrier associated with the same group.

As is explained in the above-mentioned US patent specifications the pusher shoes can be moved in the longitudinal direction of the device by guide means such as rails or the like during operation, which guide means are fixed to the frame and co-operate with the guide means 26, 27, so as to push objects present on the carriers off the conveying means formed by said carriers at desired locations. For moving the pusher shoes constructions may be used which are known per se, so that in this context it is considered superfluous to give a more detailed explanation of these constructions.

When passing sprocket wheels or the like the groups of carriers supported by the supporting plates 3 and 4 can pivot with respect to the chains because the supporting plates 3 and 4 are each pivotally coupled to the chains 1 or 2 in only one point.

As set forth above the pusher shoes are generally disposed in front of the point where the objects to be conveyed are placed on the conveying means, near the one or the other end of the associated carriers 7. This may e.g. be effected by means of suitable guide means incorporated in the frame of the device, which act on the guide means 26, 27 while they are being moved by the lower part of the conveying means.

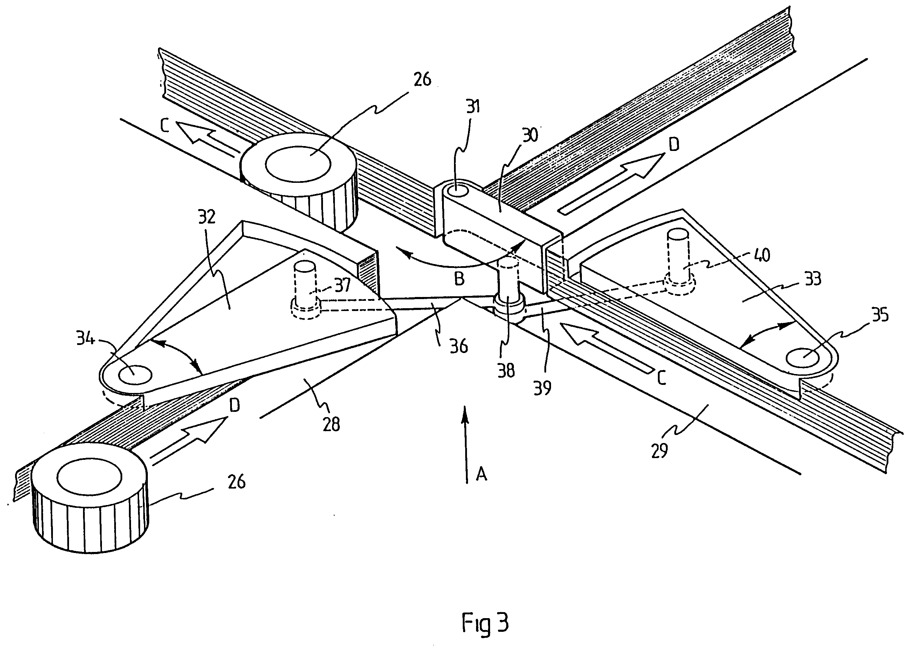

Near the intended point of discharge the pusher shoes in question are then moved, by means of suitable guide means, from the end where they are located in the direction of the other end of the carriers in question. In many cases discharge stations are located in oppposed points on both sides of the conveying means, and therefore it will be possible that, dependent on the objects to be moved, in the one case a number of sliding shoes is to be moved along the carriers from the left toward the right and in the other case from the right toward the left, when seen in the direction of movement of the conveying means. In order to effect this intersecting guide rails, extending obliquely with respect to the direction of movement of the carriers with a switching construcion are arranged adjecent the discharge stations. A first possible embodiment of said construcion is diagrammatically illustrated in Figure 3. The direction of the movement of the carriers 7 will again be in the direction according to the arrow A in this Figure. Two intersecting, diagrammatically illustrated rails 28 and 29 are provided, so as to guide a guide means 26 coupled to a pusher shoe. A switch blade 30 is disposed near the point of intersection of said rails, said switch blade being pivotable about a usually vertical axis 31, more specifically through an angle of 90°, as is indicated by means of the arrow B. In the position of the switch blade 30 illustrated in Figure 3 a guide means 26 can move freely through the rails 29, as is indicated by means of the arrows C, whilst the passage through the rail 28 is closed. When the switch blade is pivoted through 90°, as is indicated by means of arrow B, the switch blade will allow a guide means 26 to pass unimpededly through the rail 28, in the direction according to the arrow D, whilste the passage through the rail 29 is closed.

In order to effect the pivoting motion of the switch blade operating means 32 and 33 respectively are provided upstream of the point of intersection of the two rails, near the rails 28 and 29 in question, said operating means being formed by segmented plates, which are pivotable with respect to the frame about pivot pins 34 and 35 respectively extending parallel to the pivot pin 31, said pivot pins being arranged near the upstream ends of the segmented plates 32 and 33 respectively.

As is furthermore illustrated in Figure 3 a coupling rod 36 is coupled to the operating means 32 at one end, by means of a pivot pin 37 extending parallel to the pivot pin 34, and at its other end to a pin 38 secured to the switch blade 30. One end of further coupling rod 39 is coupled to said pin 38, while the other end is coupled to the operating means 33 by means of a pin 40.

In the position illustrated in the Figure the operating means 32 associated with the rail 38 lies in the path of movement of a guide means 26 moving through the rail 28 in question. It will be apparent that when said guide means 26 moving through the rail 28 comes into contact with the operating means 32, said operating means 32 will be pivoted anti-clockwise about the pin 34, when seen in Figure 3. Said pivoting will cause the switch blade 30 to pivot about the pin 31, from the position illustrated in Figure 3 into the position in which the guide means moving through the rail 28 can pass the point of intersection of the two rails 28 and 29 without impediment. At the same time the operating means 33 is pivoted into a position in which said operating means lies in the path of an operating means moving through the rail 29. As long as guide means 26 move through the rails 28 the operating means associated with the rail 29 and also the switch blade 30 will maintain the position they have taken, but when a guide means 26 approaches the point of intersection of the rails 28 and 29 through the rails 29, the operating means 33 will be pivoted again, and the switch blade 30 as well as the operating means 32 will be returned to the position illustrated in Figure 3.

It will be apparent that operating means, which are mechanically coupled to the switch blade and which are put into operation by the guide means coupled to the pusher shoes, can at all times position the switch blade such that an unimpeded passage of the operating means through an intersection is ensured.

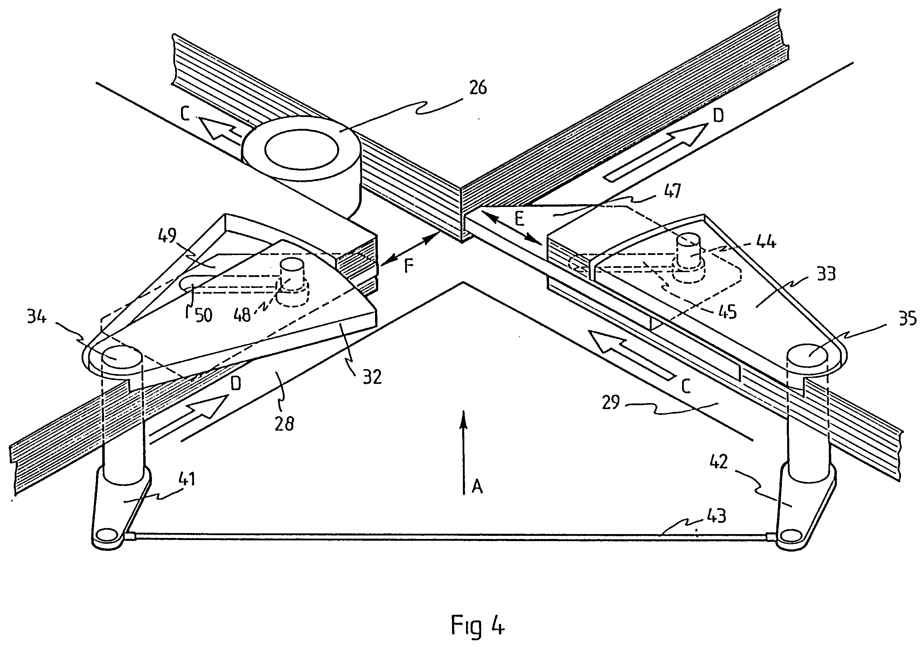

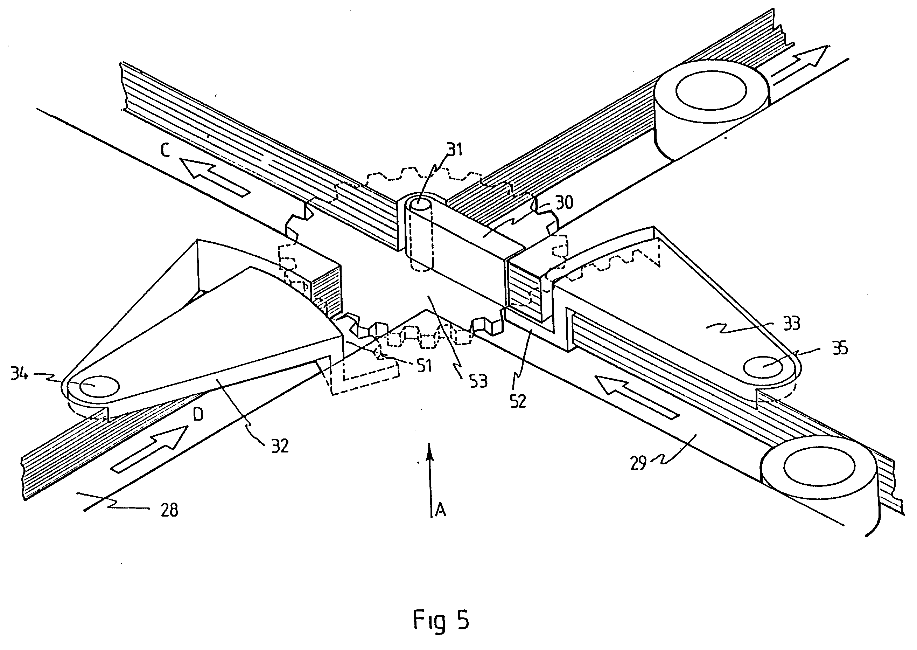

Of course variations to the embodiment of the switch construction illustrated in Figure 3 are conceivable within the spirit and scope of the invention. A few further possible embodiments are illustrated in Figures 4 and 5, in which those parts that correspond with parts described with reference to Figure 3 have been given the same reference numbers as in Figure 3.

With the construction illustrated in Figure 4 the pivot pins 34 and 35 supporting the operating means 32 and 33 are extended and provided with arms 41 and 42 respectively secured to said pins, said arms being interconnected by means of a coupling rod 43.

Furthermore a pin 44 is secured to the operating means 33, one end of said pin being located in a slotted hole 45 provided in a switch blade 47. Said switch blade 47 is supported by the frame of the device in such a manner that the switch blade can move parallel to the longitudinal direction of the rail 29, as is indicated by means of an arrow E. The slotted hole 45 extends obliquely with respect to said direction of movement according to the arrow E.

Similarly a pin 48 is secured to the operating means 32, said pin with one end being located in a slotted hole 50 provided in a switch blade 49. Said switch blade 49 is movable in the direction according to the arrow F, parallel to the longitudinal direction of the guide rail 29, whilst the slotted hole 50 includes an acute angle with the longitudinal direction of said guide rail 28.

A closer look at Figure 4 will show that when a guide means 26 moving through the rail 28 in the direction according to the arrow D comes into contact with the operating means 32, said operating means will be pivoted anti-clockwise about the central axis of the pin 34. As a result of said pivoting the switch blade 49 will be moved in the direction according to the arrow F into a position in which said switch blade closes the passage through the rail 29.

Pivoting of the operating means 32 via the arms 41 and 42 and the coupling rod 43 will furthermore cause the operating means 33 to pivot as well, from the position illustrated in Figure 4 into a position in which the operating means will come to lie in the path of movement of a guide means moving through the rail 29. As a result a said movement the switch blade 47 will be withdrawn from the position illustrated in Figure 4, in which the passage through the rail 28 is closed, into a position in which the passage through the rail 28 is released.

In the embodiment according to Figure 5 the two operating means 32 and 33 are provided with gear segments 51 and 52, which are fixedly connected to said operating means, said gear segments being interconnected by means of a sprocket wheel 53, which is secured to the pin 31 supporting the switch blade 30.

It will be apparent that pivoting of an operating means 32 or 33, caused by a guide means co-operating therewith, will lead to pivoting of both the switch blade 30 and the other operating means, in a manner similar to that described with reference to Figure 3.

## Claims

1. A conveyor having a frame and an endless drivable conveying means provided with carriers (7) extending parallel to each other, transversely to the direction of displacement of the conveying means, said carriers being pivotally coupled to at least one endless flexible coupling means (1, 2), whilst at least some of the carriers support pusher shoes (18), said pusher shoes (18) being connected to guide means located at the sides of the carriers (7) remote from the pusher shoes (18), which guide means can co-operate with two guide rails (28, 29) provided at certain locations and extending in opposite directions, obliquely with respect to the intended direction of movement (A) of the carriers (7), said guide rails intersecting one another, at the location of the point of intersection an adjustable switching device (30-40) being provided, comprising at least one switch blade (30), which is adjustable between a first position, in which a guide means (26) can move along the one of the two guide rails (28, 29), and a second position, in which the guide means (26) can move along the other of the two guide rails (28, 29), characterised in that an operating means (32, 33) is disposed near each guide rail and both operating means are mechanically coupled to the switch blade and disposed upstream of the point of intersection of the two guide rails (28, 29), when seen in the intended direction of movement (C, D) of the guide means (26) along the guide rail (28, 29), said operating means each (32, 33) being adjustable, by guide means (26) guided by the associated guide rail (28, 29) moving along during operation, from a position in the path of the guide means (26) in question to a position outside said path, while simultaneously moving the switch blade (30) from a position in the path of the guide means (26) in question to a position in which the guide means (26) is allowed to continue its movement along the guide rail in question, whilst the other operating means is simultaneously pivoted into a position in which it will come to lie in the path of movement of a guide means moving along the other guide rail.

2. A conveyor according to claim 1, characterised in that an operating means (32, 33) consists of a pivotable plate, which is coupled to the switch blade by means of coupling rods (36, 39) (Figure 3).

3. A conveyor according to claim 1, characterised in that the operating means (32, 33) consist of pivotable plates which are interconnected by means of a coupling rod (43), said plates each being coupled, by means of a pin-slotted connection (44, 45; 48, 50), to a switch blade (47, 49) which is movable in the longitudinal direction of a guide rail (Figure 4).

4. A conveyor according to claim 1, characterised in that an operating means (32, 33) consists of a pivotable plate, which is provided with a gear segment (51, 52) engaging a sprocket wheel (52) secured to the switch blade (Figure 5).

## Patentansprüche

1. Förderer mit einem Rahmen und einem endlos antreibbaren Fördermittel, das mit Trägern (7) versehen ist, die sich parallel zueinander und quer zur Förderrichtung des Förderers erstrecken und an mindestens einem endlosen flexiblen Kopplungsmittel (1, 2) schwenkbar angekoppelt sind, wobei zumindest einige der Träger Mitnehmerschuhe (18) tragen, die mit einem Führungsmittel verbunden sind, das an den von den Mitnehmerschuhen (18) entfernt liegenden Seiten der Träger (7) angeordnet ist und mit zwei Führungsschienen (28, 29) zusammenwirken kann, die an bestimmten Orten vorgesehen sind und sich in entgegengesetzte Richtungen schräg zu der vorgesehenen Bewegungsrichtung (A) der Träger (7) erstrecken und sich einander kreuzen, wobei am Ort des Kreuzungspunktes eine verstellbare Schaltvorrichtung (30-40) vorgesehen ist, die mindestens ein Schaltblatt (30) umfaßt, das zwischen einer ersten Stellung, in welcher sich ein Führungsmittel (26) entlang einer der beiden Führungsschienen (28, 29) bewegen kann, und einer zweiten Stellung, in welcher sich das Führungsmittel (26) entlang der anderen der beiden Führungsschienen (28, 29) bewegen kann, verstellbar ist, dadurch gekennzeichnet, daß nahe jeder Führungsschiene ein Betätigungsmittel (32, 33) angeordnet ist und beide Betätigungsmittel mechanisch mit dem Schaltblatt gekoppelt und, wenn in der vorgesehenen Bewegungsrichtung (C, D) des Führungsmittels (26) entlang der Führungsschiene (28, 29) betrachtet, oberhalb des Kreuzungspunktes der beiden Führungsschienen (28, 29) angeordnet sind, wobei jedes der Betätigungsmittel (32, 33) durch ein durch die zugehörige Führungsschiene (28, 29) geführtes und sich daran während der Betätigung entlang bewegendes Führungsmittel (26) von einer Stellung in der Bahn des betreffenden Führungsmittels (26) zu einer Stellung außerhalb dieser Bahn verstellbar ist, wobei es gleichzeitig das Schaltblatt (30) von einer Stellung in der Bahn des betreffenden Führungsmittels (26) zu einer Stellung bewegt, in welcher dem Führungsmittel (26) gestattet ist, seine Bewegung entlang der betreffenden Führungsschiene fortzusetzen, während das andere Betätigungsmittel gleichzeitig in eine Stellung verschwenkt wird, in welcher es in der Bewegungsbahn eines sich entlang der anderen Führungsschiene bewegenden Führungsmittels zu liegen kommen wird.

2. Förderer nach Anspruch 1, dadurch gekennzeichnet, daß ein Betätigungsmittel (32, 33) aus einer schwenkbaren Platte besteht, die mit dem Schaltblatt mittels Kupplungsstangen (36, 39) gekoppelt ist (Figur 3).

3. Förderer nach Anspruch 1, dadurch gekennzeichnet, daß die Betätigungsmittel (32, 33) aus schwenkbaren Platten bestehen, die durch eine Kupplungsstange (43) miteinander verbunden sind, wobei jede Platte mittels einer Stift-Schlitz-Verbindung (44, 45; 48, 50) mit einem Schaltblatt (47, 49) gekoppelt ist, das in Längsrichtung einer Führungsschiene bewegbar ist (Figur 4).

4. Förderer nach Anspruch 1, dadurch gekennzeichnet, daß ein Betätigungsmittel (32, 33) aus einer schwenkbaren Platte besteht, die mit einem Zahnradsegment (51, 52) versehen ist, das in ein Zahnrad (53) eingreift, das an dem Schaltblatt befestigt ist (Figur 5).

## Revendications

1. Transporteur comportant un châssis et des moyens d'acheminement sans fin pouvant être entraînés muni de supports (7) s'étendant parallèlement les uns aux autres, transversalement à la direction de déplacement des moyens d'acheminement, lesdits supports étant reliés, de façon pivotante, à au moins un moyen de couplage souple sans fin (1, 2), tandis qu'au moins certains des supports supportent des sabots pousseurs (18), lesdits sabots pousseurs (18) étant reliés à des moyens de guidage situés au niveau des côtés des supports (7) à distance des sabots pousseurs (18), lesquels moyens de guidage peuvent fonctionner avec deux rails de guidage (28, 29) disposés à certains emplacements et s'étendant dans des sens opposés, en oblique par rapport à la direction projetée de déplacement (A) des supports (7), lesdits rails de guidage se recoupant, un dispositif de commutation réglable (30-40) étant disposé au niveau de l'emplacement du point d'intersection, dispositif comprenant au moins une lame de commutation (30), qui est réglable entre une première position, dans laquelle un moyen de guidage (26) peut se déplacer le long d'un des deux rails de guidage (28, 29), et une seconde position, dans laquelle le moyen de guidage (26) peut se déplacer le long de l'autre des deux rails de guidage (28, 29),
caractérisé en ce que un moyen de mise en oeuvre (32, 33) est disposés près de chaque rail de guidage et en ce que les deux moyens de mise en oeuvre sont reliés, de façon mécanique, à la lame de commutation et sont disposés en amont du point d'intersection des deux rails de guidage (28, 29), lorsqu'ils sont vus dans la direction projetée de déplacement (C, D) du moyen de guidage (26) le long du rail de guidage (28, 29), chaque dit moyen de mise en oeuvre (32, 33) étant réglable, par un moyen de guidage (26) guidé par le rail de guidage associé (28, 29) se déplaçant le long de ce dernier pendant la mise en oeuvre, à partir d'une position dans le chemin du moyen de guidage (26) en question jusqu'à une position en dehors dudit chemin, tout en déplaçant en même temps la lame de commutation (30) à partir d'une position dans le chemin du moyen de guidage (26) en question jusqu'à une position dans laquelle le moyen de guidage (26) est autorisé à continuer son déplacement le long du rail de guidage en question, tandis que l'autre moyen de mise en oeuvre est pivoté en même temps dans une position dans laquelle il va venir se coucher dans le chemin de déplacement d'un moyen de guidage se déplaçant le long de l'autre rail de guidage.

2. Transporteur selon la revendication 1, caractérisé en ce qu'un moyen de mise en oeuvre (32, 33) est constitué par une plaque pouvant pivoter, qui est reliée à la lame de commutation au moyen de tiges de couplage (36, 39) (figure 3).

3. Transporteur selon la revendication 1, caractérisé en ce que les moyens de mise en oeuvre (32, 33) sont constitués par des plaques pouvant pivoter qui sont interconnectées au moyen d'une tige de couplage (43), lesdites plaques étant chacune couplées, au moyen d'une connexion ergot-fente (44, 45 ; 48, 50), à une lame de commutation (47, 49) qui est mobile dans la direction longitudinale d'un rail de guidage (figure 4).

4. Transporteur selon la revendication 1, caractérisé en ce qu'un moyen de mise en oeuvre (32, 33) est constitué d'une plaque pouvant pivoter, laquelle est muni d'un segment d'engrenage (51, 52) en prise dans un pignon (53) solidement fixé à la lame de commutation (figure 5).
